# EUROPEAN PATENT SPECIFICATION

(11) **EP 1 234 806 B1**
(45) Date of publication and mention of the grant of the patent: **07.02.2007**
(21) Application number: 02003258.7
(22) Date of filing: 21.02.2002
(51) Int. Cl.: C03B 37/012

(54) **Manufacturing method thereof of an optical fibre**
Verfahren zur Herstellung einer optischen Faser
Procédé de fabrication d'une fibre optique

(30) Priority: 21.02.2001 JP 2001045409
(43) Date of publication of application: 28.08.2002
(73) Proprietor: Sumitomo Electric Industries, Ltd., Osaka-shi, Osaka 541-0041 (JP)
(72) Inventor: Hasegawa, Takemi, Yokohama Works, Yokohama-shi, Kanagawa (JP); Onishi, Masashi, Yokohama Works, Yokohama-shi, Kanagawa (JP)
(74) Representative: HOFFMANN EITLE

(56) References cited:
- EP-A- 0 810 453
- WO-A-00/16141
- WO-A-00/49436
- US-A- 5 802 236
- BENNETT P J ET AL: "TOWARD PRACTICAL HOLEY FIBER TECHNOLOGY: FABRICATION, SPLICING, MODELING, AND CHARACTERIZATION" , OPTICS LETTERS, OPTICAL SOCIETY OF AMERICA, WASHINGTON, US, VOL. 24, NR. 17, PAGE(S) 1203-1205 XP000873620 ISSN: 0146-9592 * the whole document *
- WINDELER R S ET AL: "SILICA-AIR MICROSTRUCTURED FIBERS: PROPERTIES AND APPLICATIONS" , OFC/IOOC '99 OPTICAL FIBER COMMUNICATION CONFERENCE / INTERNATIONAL CONFERENCE ON INTEGRATED OPTICS AND OPTICAL FIBER COMMUNICATION. SAN DIEGO, CA, FEB. 21 - 26, 1999, OPTICAL FIBER COMMUNICATION CONFERENCE / INTERNATIONAL CONFERENCE ON INTEGRATED OP XP000967104 ISBN: 0-7803-5430-3 * the whole document *

## Description

### BACKGROUND OF THE INVENTION

### Field of the Invention

The present invention relates to a manufacturing method of an optical fiber having holes that extend along its axis.

### Description of the Background Art

As for an optical fiber having holes that extend along the axis, there is a so-called holey fiber (which is also called "microstructured optical fiber" or "photonic crystal fiber"). The holey fiber is an optical fiber that is composed of a main medium such as silica glass and a complementary medium such as gas. A chromatic dispersion of a large absolute value and a small mode field diameter can be achieved by increasing the effective refractive index differences between the core and the cladding using the large refractive index difference between the main medium and the complementary medium. A large absolute value of chromatic dispersion is preferable for dispersion compensation, and a small mode field diameter is suitable for the use of nonlinear optical effects. It is expected that a holey fiber be applied to an optical communication system. There is a description of a holey fiber in D. J. Richardson, et al.: Proc. ECOC 2000, vol. 4, pp 37-40, (Sep. 2000).

Also, a manufacturing method of holey fiber is disclosed in U.S. patent 5,802,236. According to this patent, a plurality of silica capillary tubes are sealed on one end, and bundled into a close-packed arrangement, wherein the center capillary tube is replaced by a silica rod. Next, a silica tube is placed over the bundled silica capillary tubes, and collapsed onto the bundle. The resulting preform is fed into the hot region of a drawing furnace so that the un-sealed ends of the capillary tubes are heated and are drawn into a fiber.

However, the transmission loss of such a conventional holey fiber is high. For example, the transmission loss at 1550 nm wavelength is 0.24 dB/m in P. J. Bennett, et al.: Opt. Lett. vol.24, pp.1203-1205, (1999). It is very high compared with 0.2 - 0.3 dB/km, which is a typical value of the transmission loss of an optical fiber that is practically used in an optical communication system.

### SUMMARY OF THE INVENTION

It is an object of the present invention to provide a method of making an optical fiber having one or more holes extending along its axis that has lower transmission loss.

In order to achieve these objects, a method of manufacturing an optical fiber is provided, which comprises a first process for forming a preform having at least one hole extending along its axis, a second process for heating the preform so as to dry the inner surface of its hole, and a third process for drawing the preform into an optical fiber.

In one embodiment, the hole may be a through-hole and the second process may be performed while flowing a dry gas through the through-hole. The hole may have a closed end and the second process may be performed while filling the holes having a closed end with a dry gas. In this case, the process of supplying the dry gas into the holes having a closed end and the process of discharging the gas from inside the hole may be alternately repeated. As for the holes having a closed end, the second process may be performed while the inside of the holes is subjected to reduced pressure for evacuation.

In the first process, a preform having holes may be formed from a columnar glass rod using a perforation tool, or it may be formed by assembling a plurality of silica capillary tubes and inserting the bundled tubes into a jacketing pipe.

In the second process, the preform may be heated to a temperature equal to or more than 800 °C. The dry gas may have a dew point of -50 °C or less. The gas may contain one or more inert gases such as N₂, He, or Ar by molar fraction equal to or more than 85 %. The gas may include at least one of active gases having dehydration effect, such as HF, F₂, Cl₂, or CO.

In the third process, the pressure in the holes may be adjusted. These implementation modes of the first through third processes can be preformed in various combinations.

An optional aspect of the present invention is a process for smoothing the inner wall surface of the hole prior to the second process or a process for dry-etching the inner wall surface of the hole prior to the second process.

An optical communication system includes one or more of the above-mentioned optical fibers. The above-mentioned optical fibers can be included as an optical transmission line or a dispersion compensating unit or as a part of an optical amplifier such that the characteristics of an optical communication system are improved in terms of the transmission distance and the transmission capacity.

The present invention is further explained below by referring to the accompanying drawings. The drawings are provided solely for the purpose of illustration and are not intended to limit the scope of the invention.

### BRIEF DESCRIPTION OF THE DRAWINGS

Figure 1 is a cross-sectional view showing one embodiment of an optical fiber manufactured with the method according to the present invention.
Figure 2 is a perspective view showing an example of the method of making a preform having holes.
Figure 3 is a cross-sectional view showing another preform.
Figure 4 is a cross-sectional view showing another preform.
Figure 5 is a cross-sectional view showing another preform.
Figure 6 is a perspective view showing another example of the method of making a preform having holes.
Figure 7 is a schematic diagram showing a method of removing the OH group that exists on the wall surface of a preform.
Figure 8 is a schematic diagram showing another method of removing the OH group that exists on the wall surface of a preform.
Figure 9 is a graph showing an example of the transmission loss of an optical fiber having holes.
Figure 10 is a graph showing another example of the transmission loss of an optical fiber having holes.
Figure 11 is a schematic diagram showing an example of an optical communication system equipped with a dispersion-compensating unit including the optical fiber shown in Fig. 1.
Figure 12 is a schematic diagram showing an example of an optical communication system equipped with an optical transmission line including the optical fiber shown in Fig. 1.
Figure 13 is a schematic diagram showing an example of an optical communication system equipped with another type of optical transmission line including the optical fiber shown in Fig. 1.

### DETAILED DESCRIPTION OF THE INVENTION

Embodiments of the present invention are explained below by referring to the accompanying drawings. In the drawings, the same number refers to the same or similar to avoid duplicated explanation. The ratios of the dimensions in the drawings do not necessarily coincide with the explanation.

The absorption loss due to the impurities that exist on the inner wall surface of the holes extending along the axis of an optical fiber contributes significantly to the transmission loss of the optical fiber. At the wavelength of 1400 nm - 1600 nm which is used for an optical communication system, the absorption by the OH group contributes to the transmission loss most significantly. Therefore, it is important to reduce the concentration of the OH group that exists on the inner wall surface of the holes of a fiber in order to apply the fiber to an optical communication system. The present invention was accomplished based on such recognition.

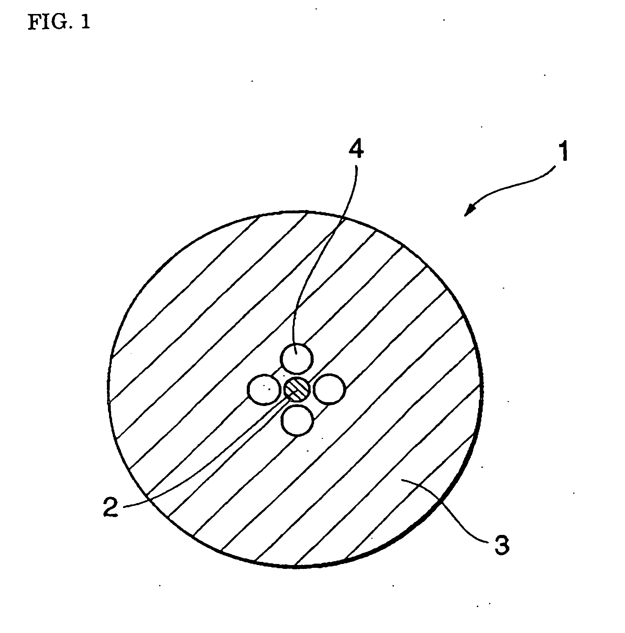

Figure 1 is a sectional view showing one embodiment of an optical fiber manufactured with the method according to the present invention. In Fig. 1, the optical fiber 1 is composed of a core 2, which consists of silica glass to which GeO₂ is added, and a cladding 3, which consists of pure silica glass and surrounds the core 2. A plurality of holes 4 are formed around the core 2 in the cladding 3, extending along the fiber axis. In an optical fiber such as the fiber 1, light with a given wavelength is confined in the core 2 by total reflection so as to be transmitted therethrough.

The core 2 may be formed of pure silica glass and the cladding 3 may be formed of silica glass which is doped with F. Either the core 2 or the cladding 3 or both may be doped with a dopant such as TiO₂, B₂O₃, or P₂O₅ so that the refractive index of the core 2 is larger than that of the cladding 3.

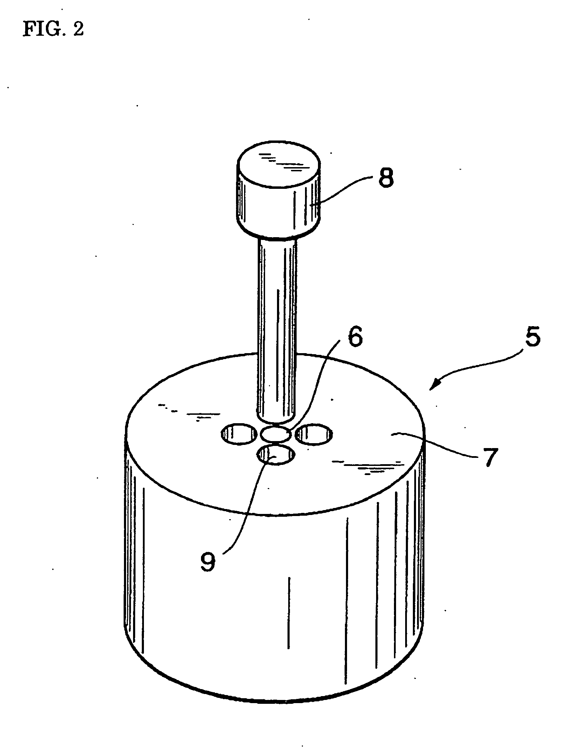

In the following, the method of manufacturing the above-mentioned optical fiber 1 is described. First, a preform of the optical fiber 1 is formed. Figure 2 shows an example of the method of making the preform.

As shown in Fig. 2, a solid columnar preform 5 is prepared first. This preform 5 comprises a core region 6 consisting of silica glass which is doped with GeO₂ and a cladding region 7 consisting of pure silica glass and surrounding the core region 6. GeO₂ is added to the core region 6 so that the relative refractive index difference between the core region 6 and the cladding region 7 becomes a desired value (e.g., 0.3 %). A solid preform such as the preform 5 can be formed by a method such as the VAD method, the MCVD method, or the OVD method.

Then, a plurality of through-holes 9 extending along the preform axis are formed around the core region 6 in the cladding region 7 of the preform 5 by drilling with a perforation tool 8 having an edge which has diamond grains on its surface. The through-holes 9 become the holes 4 of the optical fiber 1 by drawing as described later. For example, the diameter of the through-holes 9 is 3 mm, and the length of the through-holes 9 (the height of preform 5) is 300 mm. Thus, the preform having the through-holes 9 can easily be manufactured at high yield. The preform does not have any cavity except for the holes formed by the perforation tool 8. Therefore, there is no need to remove impurities that may otherwise exist in such cavity. Consequently, it is possible to shorten the time needed for removal of the OH group in the second process, and the manufacturing cost can be reduced. Also, the contraction of the holes can be easily suppressed during the drawing process by adjusting the pressure in the holes of the preform.

The through-holes 9 can also be formed by softening the preform 5 and thrusting a perforation tool made of a substance whose melting point is higher than the softening temperature of silica into the preform, instead of forming the through-holes 9 using the perforation tool 8 having an edge which has diamond grains on its surface.

It is possible to form the core region 6 and the cladding region 7 of the above-mentioned preform 5 from the silica glass to which the dopants such as GeO₂, F, TiO₂, B₂O₃ or P₂O₅ are added. The refractive index can be changed in the preform 5 by altering the amount of dopants in the preform 5. In this case, it is possible to obtain an optical fiber that has a desired chromatic dispersion and mode field diameter. Also, the position of the through-holes 9 and the material refractive index profile of the preform 5 are selected such that light with a given wavelength is confined so as to be guided through the core 2 of the optical fiber 1 by total reflection or Bragg reflection.

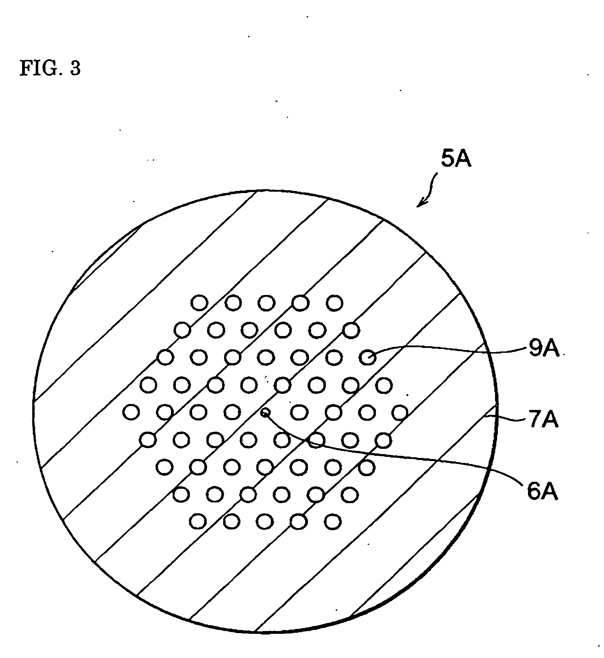

Also, the through-holes that become the holes of an optical fiber can be arranged as shown in Figs. 3 through 5.

In the composition shown in Fig. 3, a plurality of through-holes 9A are arranged in the preform 5A that consists of silica glass, and consequently, a cladding region 7A surrounds the core region 6A where the filling fraction of the holes is smaller than that in the cladding. An optical fiber that is produced from the preform 5A can let light travel in the axial direction of the fiber by confining the light in the core by total reflection. It is possible to achieve equivalently a large refractive index difference between the core and hence the cladding, and to attain a chromatic dispersion having a large absolute magnitude and a small mode field diameter. The former is preferable for application to dispersion compensation and the latter is preferable for the use of nonlinear optical effects.

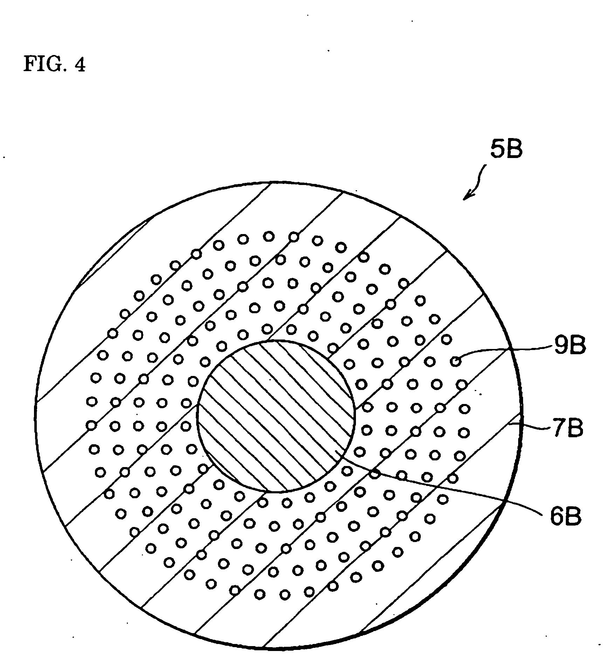

In the composition shown in Fig. 4, a plurality of through-holes 9B are arranged in a preform 5B which consists of silica glass, and consequently, a core region which includes a through-hole 6B is surrounded by a cladding region 7B which has a regular profile of refractive index in the direction of the diameter.

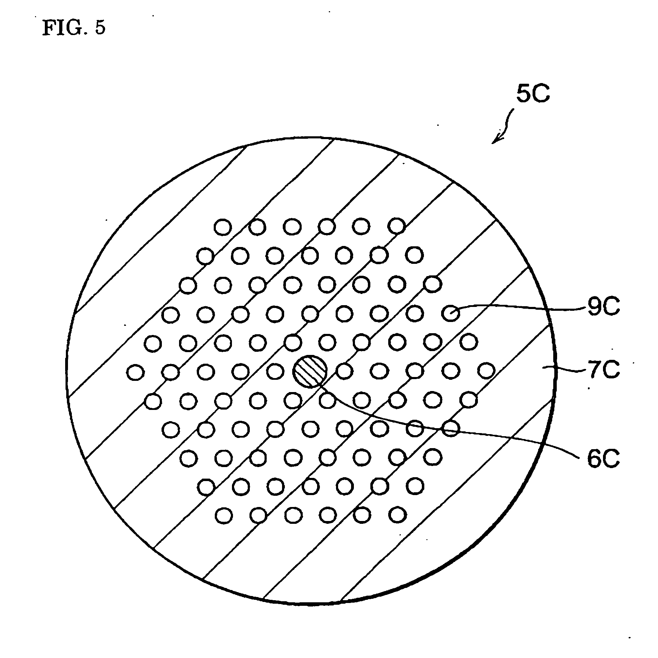

Also, as shown in Fig. 5, a plurality of through-holes 9C can be arranged in a preform 5C which consists of silica glass so that a core region which includes a through-hole 6C is surrounded by a cladding region which has a regular profile of refractive index in the section. When an optical fiber is formed with the composition shown in Fig. 4 and Fig. 5, it is possible to guide light in the axial direction of the fiber by confining the light in the core by Bragg reflection. Also, with a core including a hole, it is possible to enhance the fraction of the propagating power that exists in the hole, for example, equal to or more than 50 % of in the total propagating optical power. As a result, low transmission loss and low nonlinearity can be achieved.

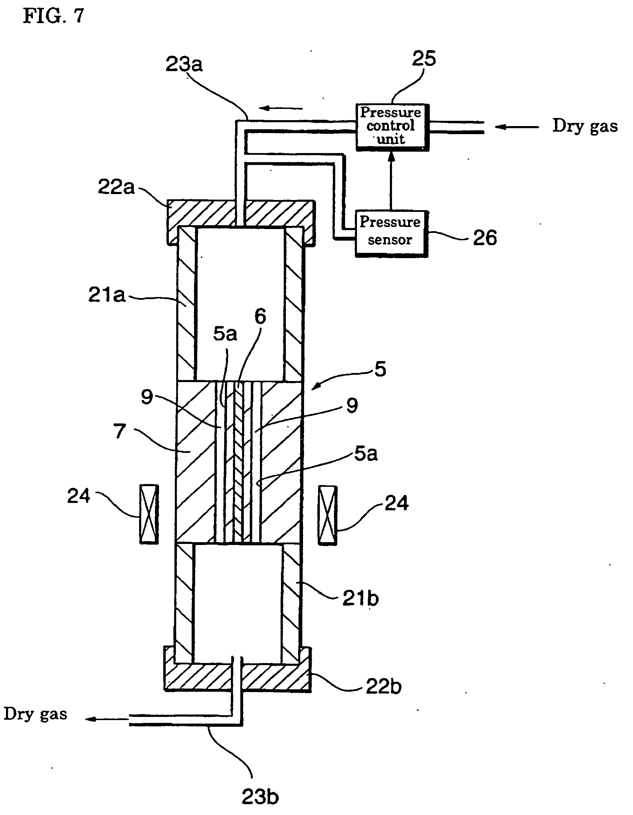

After forming the through-holes 9 in the preform 5, it is preferable to smooth the surfaces of the inner walls 5a of the through-holes 9 (see Fig. 7). The smoothing of the surfaces of the inner walls 5a can be done by scraping the surfaces of the inner walls 5a directly with a file, or by filling diamond powder and a suitable solvent in the through-holes 9 and applying an ultrasonic wave thereto. As a result of such smoothing, the surface area of the surfaces of the inner walls 5a of the preform 5 is reduced, and accordingly this decreases the quantity of the OH group that exists on the inner wall surfaces 5a. Consequently, the time needed to remove the OH group in the second process is shortened and the manufacturing cost can be reduced.

Also, after forming the through-holes 9 in the preform 5, preferably a wet etching by HF solution and a dry etching with SF₆ or the like are performed. The dry etching by SF₆ can be performed, for example, by introducing SF₆ into the through-holes 9 of the preform 5 which is heated to 1000 °C or more. The HF etching can remove contaminants that adhere to the surfaces of the inner walls 5a of the preform 5 at the time of drilling. Also, the SF₆ etching smoothes the surfaces of the inner walls 5a, and removes a layer that includes the OH group on the surfaces of the inner walls 5a of the preform 5. This further decreases the quantity of the OH group which exists on the surfaces of the inner walls 5a, and thereby shortens the time needed to remove the OH group in the second process, which results in the further reduction of manufacturing cost.

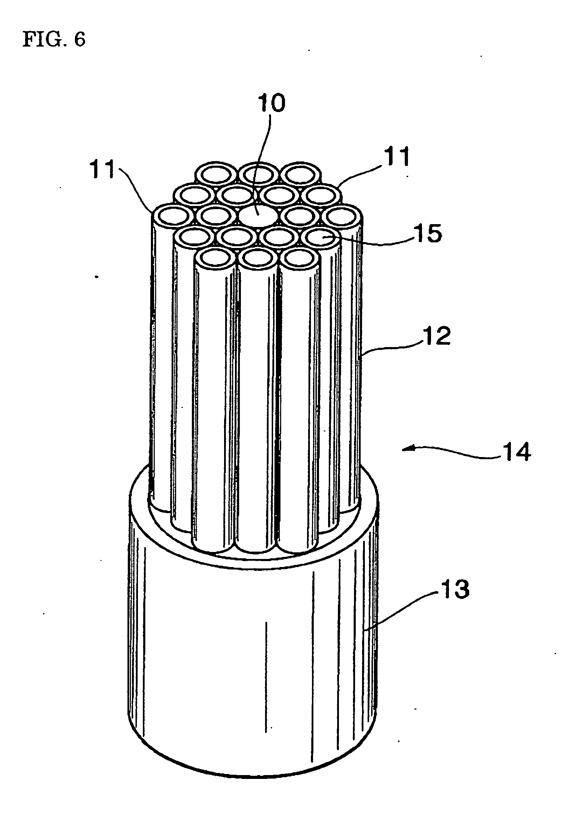

Another method for making a preform is shown in Fig. 6. In Fig. 6, first, a rod 10 made of silica glass and plurality of capillaries 11 made of silica glass are assembled to form a bundle 12. The rod 10, which forms the core of an optical fiber, has approximately the same diameter as the diameter of a capillary 11. It is possible to provide different rods having a diameter less than half of the diameter of a capillary 11, as spacers to fill the spaces among capillaries 11 or among the glass rod 10 and capillaries 11. Then, a preform 14 is formed by inserting the bundle 12 into a jacketing pipe 13 made of silica glass having an inner diameter slightly larger than the diameter of the bundle 12. In such structure, the hollow region of a capillary 11 constitutes a through-hole 15 of preform 14. Typically, the diameter of the rod 10 and the capillary 11 is about 1 mm, and the ratio of the inner diameter to the outer diameter of the capillary 11 is 0.4 or 0.8, for example. As for a jacketing pipe 13, the outer diameter is about 20 mm and the inner diameter is about 18 mm.

In the method of forming a preform by assembling a plurality of capillaries, it is possible to form small-diameter holes in an optical fiber because a preform which includes small-diameter through-holes can be produced easily. Thus, by reducing the diameter of the holes of an optical fiber it is possible to achieve a small effective refractive index even at a comparatively short wavelength. This method is therefore advantageous for producing an optical fiber suitable for transmitting light with a short wavelength.

After forming a preform having a plurality of through-holes as described above, a process is performed for removing the OH group that exists on the inner wall surfaces of through-holes in the preform. A setup for implementing the process of removing the OH group is shown in Fig. 7.

As shown in Fig. 7, the preform 5 which has through-holes 9 is set in the furnace of a drawing tower. Each end of the preform 5 is connected to an end of a glass pipe 21a or 21b, and the other end of each of the glass pipes 21a and 21b is fixed to a covering 22a or 22b. Consequently, in such structure, it is possible to prevent contaminants from entering into the through-holes 9 of the preform 5. The length of the glass pipes 21a and 21b is adjusted according to the coordination of the drawing tower. The glass pipe 21a is connected to a supply pipe 23a which supplies a dry gas into the through-holes 9 of the preform 5. Also, the glass pipe 21b is connected to an exhaust pipe 23b for discharging a dry gas to the outside of the preform 5.

The term "dry gas" as used herein means a substantially dry gas which includes a slight amount of moisture, as well as a completely dry gas. The glass pipes 21a and 21b are provided so that the effective portion of the preform 5, that is, the part which becomes an optical fiber after drawing, is connected to the supply pipe 23a, the exhaust pipe 23b, and a holding means (not illustrated).

In the above-described structure, a dry gas is flowed, for example, at a flow rate of about 5 liters per minute through the through-holes 9 of the preform 5, from one end to the other end of the preform 5, while the preform 5 is heated by a heating means 24 in the furnace. Preferably, the preform 5 is heated for 30 minutes or more at equal to or more than 800 °C, and more preferably for one hour or more at equal to or more than 1200 °C. In the case in which the heating means 24 are smaller than the length of the preform effective portion of the preform 5, the preform 5 may be moved up and down timely so that the whole preform effective portion is heated appropriately.

Heating the preform 5 in this manner while flowing a dry gas through the through-holes 9 of the preform 5 promotes the reaction in which the OH group which exists on the surfaces of the inner walls 5a of the through-holes 9 of the preform 5 becomes H₂O molecules. Thus, the OH group which exists on the inner wall surface of the preform diffuses to the spaces of the through-holes 9 as the H₂O molecules. Then, the diffused H₂O molecules are discharged outside the preform through the exhaust pipe 23b by the flow of the dry gas without staying in the through-holes 9. Consequently, the OH concentration on the surfaces of the inner walls 5a decreases. Also, because flowing the dry gas through the through-holes 9 restrains OH from re-adsorption to the inner wall surfaces 5a, the decrease of the OH concentration on the surfaces of the inner walls 5a is accelerated. Thus, it is possible to quickly remove the OH group which exists on the surfaces of the inner walls 5a so as to reduce the transmission loss of the optical fiber which is caused by the OH group. Moreover, it is possible to reduce the manufacturing cost. The OH concentration can be reduced further by performing the heating for 30 minutes or more.

In this case, to effectively remove the OH group which exists on the inner wall surfaces 5a, it is desirable to use a dry gas whose H₂O concentration is sufficiently low. More specifically, a dry gas whose dew point is -50 °C or less, more preferably -70 °C or less, is used. This results in further restraining the re-adsorption of OH to the inner wall surface of the preform, and consequently reducing the transmission loss of the optical fiber further more.

When the preform 5 made of silica glass is heated, the gaseous molecules in the through-holes 9 of the preform 5 tend to react to glass easily. Some of such chemical reaction degrades the transmission characteristics by increasing the light absorption and the light scattering. Therefore, it is preferable to use a dry gas that includes an inert gas by equal to or more than 85 % in terms of molar fraction. When a dry gas is chemically inactive, it does not react to silica glass easily, and consequently the chemical reaction between the gas and glass in the through-holes 9 is restrained. This results in the avoidance of the light absorption and the light scattering, and hence the deterioration of the transmission characteristics of the optical fiber can be prevented. For a dry gas, an inert gas which includes one or more of N₂, He, or Ar by equal to or more than 85 % in terms of molar fraction is preferable. These gases are especially inert and effective for restraining the chemical reaction with glass.

Also, a gas that includes an active gas having a dehydration effect can be used as a dry gas. In this case, since the decrease of the OH concentration on the surfaces of the inner walls 5a of the preform 5 can be accelerated, the time needed for removing OH group is reduced and hence the manufacturing cost can be reduced. As for the active gas having a dehydration effect, a gas that includes at least one of HF, F₂, Cl₂, and CO is used. These gases have particularly excellent characteristics for dehydration effect and are effective for reducing the time needed for removing OH. The decrease of the OH concentration can be further accelerated when the concentration of active gas is high, for example, equal to or more than 30 %.

It is not necessarily in a drawing tower that the above-described process for removing OH group which exists on the surfaces of the inner walls 5a of above mentioned preform 5 is performed. It is possible to use any other coordination suitable for the process.

After performing the process for removing the OH group as described above, the preform 5 is heated to about 1800 °C by the heating means 24 of the drawing tower. The heated portion of the preform 5 softens and narrows in a neck-like shape by the weight of the glass pipe 21b. The glass pipe 21b is detached from the preform 5 at this narrowed portion. Then, the preform 5 is drawn from the bottom end thereof into an optical fiber by a known method. Thus, an optical fiber 1 having a plurality of holes 4 as shown in Fig. 1 and having a 125 µm diameter is produced. When such drawing is done in a state in which the above-mentioned covering 22a is attached, contaminants such as moisture and the like are prevented from entering into the through-holes 9 of the preform 5, and hence the yield of drawing is improved.

At the time of drawing the preform 5 in this manner, the surface tension on the surfaces of the inner walls 5a of the through-holes 9 of the preform 5, the filling fraction of holes of the optical fiber 1 tends to decrease. Here, the term "filling fraction of holes" is the value obtained by dividing the cross-sectional area of the holes of the fiber by the cross-sectional area of the fiber or the value obtained by dividing the cross-sectional area of the through-holes 9 of the preform 5 by the cross-sectional area of the preform 5. The filling fraction of holes at the time of such drawing also depends on the difference in pressure between the inside of the through-holes 9 of the preform 5 and the inner wall 5a. Therefore, a desired filling fraction of holes of the optical fiber 1 can be obtained by controlling the pressure in the through-holes 9.

More specifically, a pressure control unit 25 for adjusting the supply pressure of a dry gas and a pressure sensor 26 for measuring the pressure in the through-holes 9 of the preform 5 are provided in the supply pipe 23a. The pressure sensor 26 measures the pressure in the supply pipe 23a and the pressure in the through-holes 9 can be obtained based on the value thus measured. Then, the pressure control unit 25 controls the supply pressure of a dry gas so that the pressure in the through-holes 9 becomes a desired value based on the value measured by the pressure sensor 26. Thus, the contraction of the through-holes 9 by the surface tension on the surfaces of the inner walls 5a of the preform 5 is restrained such that an optical fiber having a desired filling fraction of holes can be drawn. Also, the filling fraction of holes of the optical fiber 1 can be controlled by adjusting the supply pressure of a dry gas. In this case, the characteristics of the fiber, such as the chromatic dispersion and the mode field diameter can be easily adjusted.

Also, the means for connecting a preform with the means of supplying a dry gas in the second process and the means for connecting the preform with the means of adjusting pressure in the third process can be partly or wholly same. Consequently, the invasion of contaminants accompanying a change in connection between the processes can be prevented.

In the present embodiment as described above, after forming the preform 5 having the through-holes 9, the preform 5 is heated while flowing a dry gas into the through-holes 9, and the OH group which exists on the surfaces of the inner walls 5a of the through-holes 9 in the preform 5 is removed, and consequently the optical fiber 1 having a low transmission loss can be obtained. Also, since the re-adsorption of OH group to the surfaces of the inner walls 5a of the preform 5 is restrained, the OH concentration on the surfaces of the inner walls 5a decreases promptly.

Since the surfaces of the inner walls 5a of the preform 5 are smoothed and subjected to dry etching before heating the preform 5 with flowing a dry gas into the through-holes 9, the quantity of the OH group that exists on the surfaces of the inner walls 5a decreases. Consequently, the time needed for the removal of the OH group is shortened, and the reduction of the manufacturing cost can be achieved. Moreover, an optical fiber 1 having a desired filling fraction of holes can be obtained since the pressure in the through-holes 9 of the preform 5 is adjusted at the time of drawing the preform 5 into the optical fiber 1.

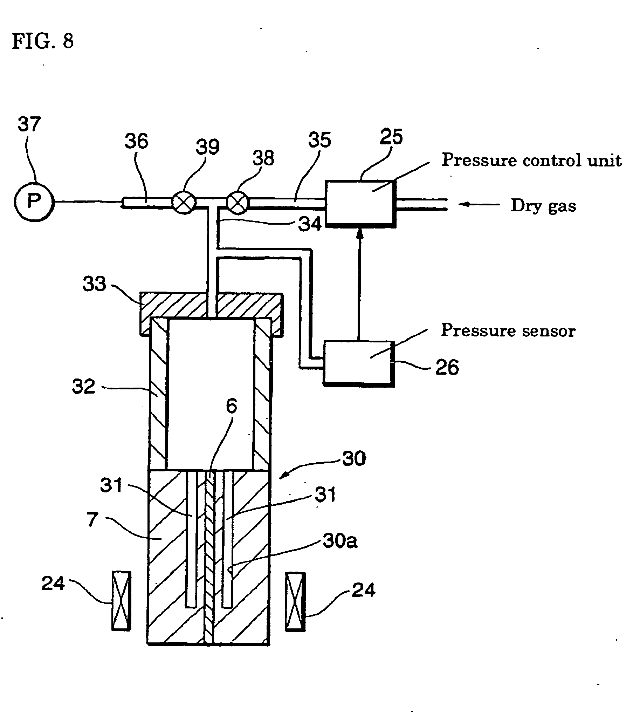

In the following, another method for manufacturing the optical fiber 1 shown in Fig. 1 is described with respect to Fig. 8. As for the contents similar to the above-mentioned manufacturing method, the explanation thereof will be omitted.

In this manufacturing method, the preform 30 of an optical fiber 1 has a plurality of holes 31 each of which extends axially and is closed at one end. In the method of using the perforation tool 8 as shown in Fig. 2, the preform 30 is formed by perforating a glass rod 7 halfway, and in the method of assembling the capillaries 11 as shown in Fig. 6, the preform 30 is formed by using a jacketing pipe closed at one end. After forming the preform 30, the process for removing the OH group, which exists on the surfaces of the inner walls 30a of the closed-end holes 31 in the preform 30, is performed in the setup shown in Fig. 8. As shown in Fig. 8, one end of a glass pipe 32 is connected to the end of the preform 30 on the side having the openings, and the other end of the glass pipe 32 is provided with a covering 33. A pipe 34, which is connected to the covering 33, is connected in bifurcation to a supply pipe 35 for supplying a dry gas into the holes 31 having a closed end in the preform 30 and to an exhaust pipe 36 for discharging the dry gas in the holes 31 having a closed end. The exhaust pipe 36 is connected to a vacuum pump 37. Valves 38 and 39 are provided for the pipes 35 and 36, respectively.

In the above setup, in a state in which the valve 39 is closed and the valve 38 is open, a dry gas is flowed to fill the holes 31 having a closed end in the preform 30. In this state, the preform 30 is heated by heating means 24 in the furnace at a temperature equal to or more than 800 °C for 30 minutes or more. Then, after the elapse of a predetermined time, in a state in which the valve 38 is closed and the valve 39 is opened, the gas in the holes 31 having a closed end is exhausted therefrom by a vacuum pump 37.

This diffuses the OH group, as H₂O molecules, from the surfaces of the inner walls 30a of the holes having a closed end in the preform 30 into the spaces of the holes 31 having a closed end. Then, the H₂O molecules are discharged outside the preform 30 by diffusion or convection, and further discharged by the vacuum pump 37. Therefore, the OH group that exists on the surfaces of the inner walls 30a of the preform 30 is effectively removed, and the transmission loss of the optical fiber due to the OH group is reduced. Also, since the re-adsorption of OH to the wall surfaces is restrained by the use of the dry gas, the decrease of the OH concentration is facilitated. Therefore, the reduction of the manufacturing cost can also be achieved.

If such filling and exhaust of a dry gas is repeated alternately several times, the H₂O molecules that are diffused in the spaces of the holes having a closed end are more effectively discharged outside the preform. Also, the re-adsorption of OH to the inner wall surfaces is more effectively restrained. Therefore, the transmission loss of the optical fiber can be reduced further.

In this case, the decrease of the OH concentration on the surfaces of the inner walls 30a can be facilitated by reducing the diffusion of the H₂O molecules from the ineffective portion of the preform 30 to the effective portion of the preform 30. As for the method of reducing the diffusion of the H₂O molecules from the ineffective portion of the preform to the effective portion of the preform, there are several means, such as maintaining the temperature of the effective portion of the preform higher than that of the ineffective portion of the preform, or providing a hygroscopic medium for the ineffective portion of the preform, or making the capacity of the holes 31 having a closed end in the ineffective portion of the preform larger than that of the holes 31 having a closed end in the effective portion of the preform.

After performing the process for removing the OH group as described above, the preform 30 is heated by the heating means 24 of the drawing tower, and is drawn into a fiber from the end of the preform 30 at the heated side thereof. In this case, the supply pressure of a dry gas is controlled by the pressure control unit 25 and the pressure sensor 26 provided in the supply pipe 35 so that the pressure in the holes 31 having a closed end of the preform 30 reaches a desired level. In this manner, the contraction of the holes 31 having a closed end due to the surface tension on the surfaces of the inner walls 30a of the preform 30 is restrained, and an optical fiber having a desired filling fraction of holes can be drawn.

In the above-described embodiment, since the OH group which exists on the surfaces of the inner walls 30a of the holes 31 having a closed end in the preform 30 is removed, the transmission loss of the optical fiber due to the OH group can be reduced.

Another method for producing the optical fiber 1 shown in Fig. 1 is described below. As for the contents similar to the above-described manufacturing method, the explanation thereof is omitted. In this manufacturing method, the preform 30 shown in Fig. 8 is used.

First, the preform 30 which has holes 31 having a closed end is formed. Subsequently, in a state in which the valve 38 is closed and the valve 39 is opened, the gas within the holes 31 having a closed end is evacuated by the vacuum pump 37, and the preform 30 is heated for 30 minutes or more at a temperature equal to or more than 800 °C by the heating means 24 in the furnace. As a result, the OH group which exists on the surfaces of the inner walls 30a of the holes 31 having a closed end in the preform 30 diffuses as H₂O molecules into the spaces of the holes 31 having a closed end, and the H₂O molecules are discharged outside the preform 30 due to the evacuation.

Subsequently, in a state in which the valve 39 is closed and the valve 38 is opened, a dry gas is flowed to fill the holes 31 having a closed end of the preform 30. Then, the preform 30 is heated by the heating means 24 of the drawing tower and drawn into a fiber from the heated end of the preform 30.

In such embodiment also, the OH group which exists on the surfaces of the inner walls 30a of the holes 31 having a closed end in the preform 30 diffuses as H₂O molecules into the spaces in the holes having a closed end. Then, the H₂O molecules are discharged outside the preform due to the evacuation. Consequently, it is possible to decrease the OH concentration on the wall surfaces of the preform, thereby reducing the transmission loss of the optical fiber which is caused by the OH group.

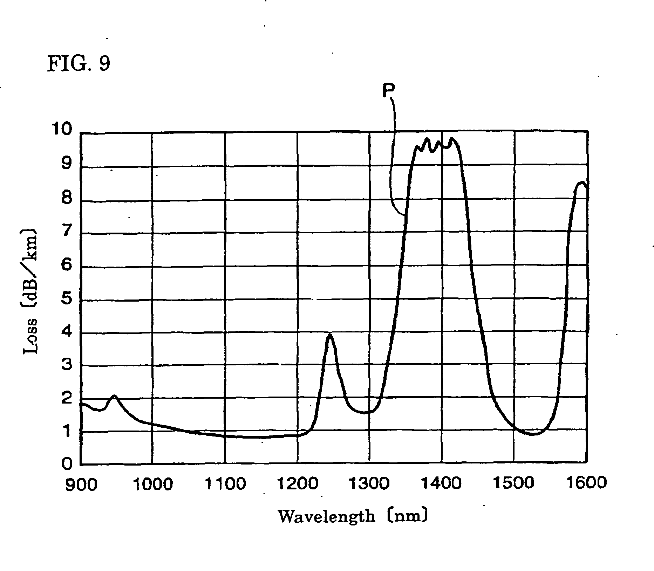

Figure 9 shows an experimental example of the transmission loss of an optical fiber which was drawn as described below. In Fig. 9, the solid line P is the transmission loss in the case where a process was performed for removing the OH group which existed on the inner wall surfaces of the preform. In the process for removing the OH group, N₂ having a dew point of -70 °C or less was used as a dry gas, and the preform was heated for 3 hours at the temperature of 1200 °C while flowing such N₂ into the holes of the preform.

As can be seen from Fig. 9, in the case where the process for removing the OH group was performed, the transmission loss in the spectrum band of about 1100 - 1700 nm was reduced and the transmission loss at the 1550 nm wavelength was 1.1 dB/km. The transmission loss above 8.5 dB/km could not be measured correctly because it exceeded the possible measurement range of the measuring instrument.

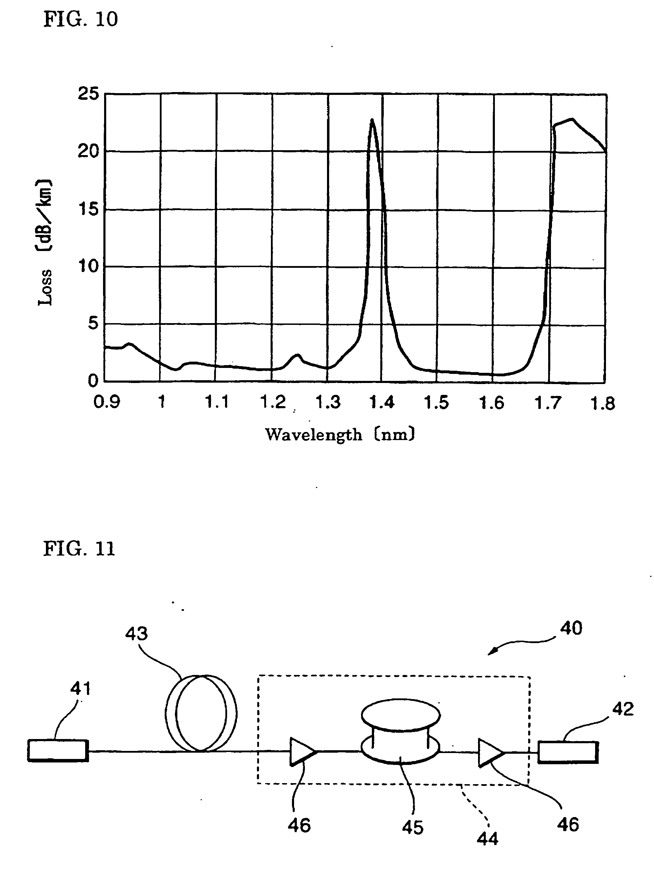

Figure 10 shows an experimental example of the transmission loss in the case where the wall surfaces of the preform were smoothed prior to the process of removing the OH group as described above. As can be seen from Fig. 10, the transmission loss at 1380 nm, which is the absorption peak wavelength for the OH group, is about 24 dB/km, and at the wavelength 1550 nm, the transmission loss is reduced to 0.68 dB/km.

With respect to the optical fiber 1 having the holes 4 which were obtained by the various above-mentioned manufacturing methods, the loss due to the absorption of the OH group decreases, and the transmission loss in the 1100 - 1700 nm spectrum band is also reduced. Thus, it is possible to achieve a transmission loss of 200 dB/km or less at 1380 nm, which is the absorption peak wavelength for the OH group, and 10 dB/km or less at 1550 nm.

In this case, preferably if the density of the water which exists inside the holes 4 of the optical fiber 1 is 1 mg / liter or less, the adsorption of the water which is contained in the holes 4 to the inner wall surfaces of the holes 4 is suppressed, and hence it is possible to ensure the transmission loss of 200 dB/km or less at the wavelength of 1380 nm. Moreover, preferably, the holes of the optical fiber are sealed at both ends of the optical fiber and are insulated from the outer air, so that the density of the water which exists inside the holes is thereby maintained at a level of 1 mg / liter or less for a sufficient period. As for the means of sealing the holes, the methods such as melting the glass by heat, or sealing the ends of the holes with a highly transparent substance can be used, for example.

The optical fiber 1 having the holes 4 whose transmission loss is small is suitable for use as a dispersion compensator. In the case of using the optical fiber as a dispersion compensator, since it can be used in a long length, the dispersion quantity that can be compensated is increased, whereby allowing a transmission distance to be increased by elongating the transmission line whose dispersion is to be compensated.

In the case of the optical fiber 1 having the holes 4 whose loss is 3 dB/km or less at 1550 nm, when it is used as a dispersion compensator, the compensating dispersion quantity can be further increased, thereby further increasing the transmission distance. Also, it is possible to increase the efficiency of spectrum use, that is, transmission capacity per frequency band, because the input light signal power of the dispersion compensator for achieving a given SN ratio can be reduced, and thereby suppressing the deterioration of transmission quality due to the nonlinear optical effects such as SPM, XPM, FWM, or the like.

In the case of the optical fiber 1 having the holes 4 whose transmission loss is 300 dB/km or less at 1380 nm, and 1 dB/km or less at 1550 nm, when it is used as a dispersion compensator, the compensating dispersion quantity can be further increased, and thereby the transmission distance can be additionally increased. Also, since the input light signal power of the dispersion compensator can be further reduced, the efficiency of spectrum use can be further increased. Also, in this case, since the transmission on the order of tens of km becomes possible, the fiber can be used suitably not only for a dispersion compensator, but also for an optical transmission line, and the transmission distance can be further increased. Also, light signal at the 1550 nm wavelength band can be amplified by stimulated Raman scattering by launching pump light near the 1400 nm wavelength thereon.

An optical communication system using optical fibers having such low transmission loss is described below.

Figure 11 shows an example of the optical communication system equipped with a dispersion compensator which includes the optical fiber 1 shown in Fig. 1. In this optical communication system 40, an optical transmitter 41 and an optical receiver 42 are connected through an optical transmission line 43 and a dispersion compensator 44. The optical transmission line 43 is composed of one or more kinds of optical fibers and normally has a positive chromatic dispersion. The dispersion compensator 44 is connected to the downstream of the optical transmission line 43. This dispersion compensator 44 comprises a coil 45 and optical amplifiers 46. The coil 45 consists of the optical fiber 1 having the chromatic dispersion of the opposite sign with respect to the dispersion of the optical transmission line 43. Each of the optical amplifiers 46 is provided upstream and downstream of the coil 45, respectively. In such composition, large transmission capacity can be obtained because the chromatic dispersion of the optical transmission line 43 is compensated by the dispersion compensator 44, and thereby the degradation of pulse waveform is restrained. Also, by inserting dispersion compensator 44 downstream of the optical transmission line 43, the input light signal power to the dispersion compensator 44 is reduced, and the deterioration of transmission quality due to the nonlinear optical effect such as FWM or the like is restrained, thereby improving the efficiency of spectrum use.

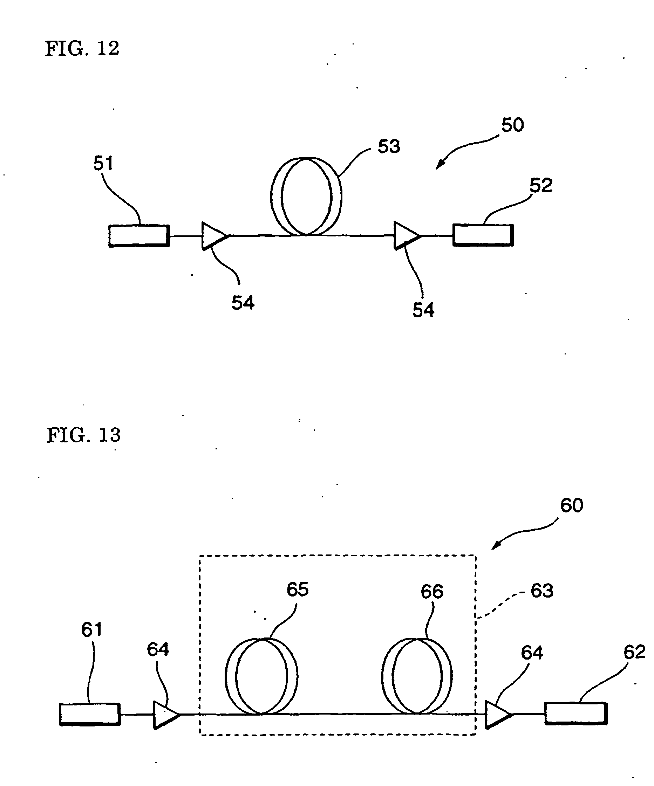

Figure 12 shows another example of the optical communication system equipped with an optical transmission line which includes the optical fiber 1 shown in Fig. 1. In this optical communication system 50, an optical transmitter 51 and an optical receiver 52 are connected through an optical transmission line 53 and optical amplifiers 54. The optical fiber 1 used for the optical transmission line 53 is 30 km or longer in length and has a chromatic dispersion of 1 - 10 ps / nm/km in terms of absolute magnitude over the wide spectrum band of 50 nm or more. It is possible to increase the transmission distance further by connecting a plurality of optical transmission lines with an optical amplifier being provided therebetween. Since the chromatic dispersion of small absolute magnitude is obtained over the wide band as described above, it is possible to perform multiple wavelength transmission having a large transmission capacity per wavelength and a large number of wavelengths, and thereby a large transmission capacity can be obtained.

Figure 13 shows another example of the optical communication system equipped with an optical transmission line which includes the optical fibers 1 shown in Fig. 1. In this optical communication system 60, an optical transmitter 61 and an optical receiver 62 are connected through the optical transmission line 63 and optical amplifiers 64. The optical transmission line 63 includes a transmission line 65 comprising an ordinary optical fiber which has no hole and a transmission line 66 comprising the optical fiber 1 having holes 4 as shown in Fig. 1. The ordinary optical fiber used for the transmission line 65 is 30 km or more in length and has the chromatic dispersion of +1 ps / nm/km. The optical fiber 1 used for transmission line 66 is 10 km or more in length and has the chromatic dispersion of -3 ps / nm/km. The length of each optical fiber is selected such that the cumulative chromatic dispersion falls within a given range of value. It is possible to increase the transmission distance further by connecting a plurality of optical transmission lines with an optical amplifier provided therebetween. By using an optical fiber having absolute chromatic dispersion of a given value as described above, the deterioration of the transmission quality due to nonlinear optical effects such as FWM or the like is restrained, and thereby the transmission capacity and the efficiency of spectrum use can be improved.

The present invention is not limited to the above-described embodiments. For example, the optical fibers in the above embodiments have holes solely in the cladding, but it is also possible to apply the present invention to an optical fiber having a hole in the core.

## Claims

1. A manufacturing method of an optical fiber having one or more holes extending along the axis, comprising:
a first process for forming a preform having at least one hole;
a second process for heating the preform and drying the inside of the holes; and
a third process for drawing the preform into an optical fiber.

2. A manufacturing method of an optical fiber according to claim 1, wherein:
at least a part of the holes are through-holes; and
the second process is performed while a dry gas is flowed through the through-holes.

3. A manufacturing method of an optical fiber according to claim 1, wherein:
at least a part of the holes have a closed end; and
the second process is performed while the holes having a closed end are filled with a dry gas.

4. A manufacturing method of an optical fiber according to claim 3, wherein:
the process for filling a dry gas into the holes having a closed end and the process for discharging the dry gas from the holes having a closed end are repeated alternately in the second process.

5. A manufacturing method of an optical fiber according to claim 1, wherein:
at least a part of the holes have a closed end; and
the second process is performed while the inside of the one or more holes having a closed end is subjected to reduced pressure for evacuationing.

6. A manufacturing method of an optical fiber according to any one of claims 1 through 5, wherein:
the preform is heated at a temperature equal to or higher than 800 °C in the second process.

7. A manufacturing method of an optical fiber according to any one of claims 2 through 4, or 6 wherein:
the dew point of the dry gas is -50 °C or lower.

8. A manufacturing method of an optical fiber according to claim 7, wherein:
the dry gas includes an inert gas equal to or more than 85 % by molar fraction.

9. A manufacturing method of an optical fiber according to claim 8, wherein:
the inert gas is selected from a group consisting of N₂, He, and Ar.

10. A manufacturing method of an optical fiber according to claim 7, wherein:
the dry gas includes an active gas which has dehydration effect.

11. A manufacturing method of an optical fiber according to claim 10, wherein:
the active gas having dehydration effect includes at least one of HF, F₂, Cl₂, and CO.

12. A manufacturing method of an optical fiber according to any one of claims 1 through 11, wherein:
the inner wall surfaces of the holes of the preform are smoothed prior to the second process.

13. A manufacturing method of an optical fiber according to any one of claims 1 through 12, wherein:
the inner wall surfaces of the holes of the preform are subjected to dry etching prior to the second process.

14. A manufacturing method of an optical fiber according to any one of claims 1 through 13, wherein:
the pressure in the holes is adjusted during to the third process.

15. A manufacturing method of an optical fiber according to any one of claims 1 through 14, wherein:
the preform having the holes is formed from a columnar glass rod, using a perforation tool in the first process.

16. A manufacturing method of an optical fiber according to any one of claims 1 through 14, wherein:
a plurality of capillary tubes are assembled to form a bundle and the bundle is inserted into a jacketing pipe to form the preform having the holes in the first process.

## Patentansprüche

1. Herstellungsverfahren für eine optische Faser mit einem oder mehreren Löchern, die sich entlang der Achse erstrecken, welches folgendes umfaßt:
einen ersten Arbeitsvorgang zur Ausbildung einer Vorform mit mindestens einem Loch;
einem zweiten Arbeitsvorgang zum Erwärmen der Vorform und Trocknen des Inneren der Löcher; und
einen dritten Arbeitsvorgang zum Ziehen der Vorform in eine optische Faser.

2. Herstellungsverfahren für eine optische Faser gemäß Anspruch 1, bei dem mindestens ein Teil der Löcher Durchgangslöcher sind; und der zweite Arbeitsvorgang durchgeführt wird, während man ein trockenes Gas durch die Durchgangslöcher fließen läßt.

3. Herstellungsverfahren für eine optische Faser gemäß Anspruch 1, bei dem mindestens ein Teil der Löcher ein verschlossenes Ende haben; und der zweite Arbeitsvorgang durchgeführt wird, während die Löcher mit einem verschlossenen Ende mit einem trockenen Gas gefüllt sind.

4. Herstellungsverfahren für eine optische Faser gemäß Anspruch 3, bei dem der Arbeitsvorgang für das Einfüllen eines trockenen Gases in die Löcher mit einem verschlossenen Ende und der Arbeitsvorgang zur Entnahme des trockenen Gases aus den Löchern mit einem verschlossenen Ende im zweiten Arbeitsvorgang abwechselnd wiederholt werden.

5. Herstellungsverfahren für eine optische Faser gemäß Anspruch 1, bei dem mindestens ein Teil der Löcher ein verschlossenes Ende haben; und der zweite Arbeitsvorgang durchgeführt wird, während das Innere der einen oder mehreren Löcher mit einem verschlossenen Ende zur Evakuierung einem verringerten Druck ausgesetzt wird.

6. Herstellungsverfahren für eine optische Faser gemäß mindestens einem der Ansprüche 1 bis 5, bei dem beim zweiten Arbeitsvorgang die Vorform auf eine Temperatur gleich oder höher als 800°C erwärmt wird.

7. Herstellungsverfahren für eine optische Faser gemäß mindestens einem der Ansprüche 2 bis 4 oder 6, bei dem der Taupunkt des trockenen Gases -50°C oder niedriger ist.

8. Herstellungsverfahren für eine optische Faser gemäß Anspruch 7, bei dem das trockene Gas ein Inertgas mit einem molaren Anteil von gleich oder mehr als 85 % enthält.

9. Herstellungsverfahren für eine optische Faser gemäß Anspruch 8, bei dem das Inertgas ausgewählt ist aus der Gruppe bestehend aus N₂, He und Ar.

10. Herstellungsverfahren für eine optische Faser gemäß Anspruch 7, bei dem das trockene Gas ein aktives Gas enthält, welches einen Dehydratationseffekt hat.

11. Herstellungsverfahren für eine optische Faser gemäß Anspruch 10, bei dem das aktive Gas mit einem Dehydratationseffekt mindestens eines aus HF, F₂, Cl₂ und CO einschließt.

12. Herstellungsverfahren für eine optische Faser gemäß mindestens einem der Ansprüche 1 bis 11, bei dem die inneren Wandflächen der Löcher der Vorform vor dem zweiten Arbeitsvorgang geglättet werden.

13. Herstellungsverfahren für eine optische Faser gemäß mindestens einem der Ansprüche 1 bis 12, bei dem die inneren Wandflächen der Löcher der Vorform vor dem zweiten Arbeitsvorgang der Trockenätzung unterzogen werden.

14. Herstellungsverfahren für eine optische Faser gemäß mindestens einem der Ansprüche 1 bis 13, bei dem während des dritten Arbeitsvorgangs der Druck in den Löchern eingestellt wird.

15. Herstellungsverfahren für eine optische Faser gemäß mindestens einem der Ansprüche 1 bis 14, bei dem beim ersten Arbeitsvorgang die Vorform mit den Löchern gebildet wird aus einem säulenförmigen Glasstab unter Verwendung eines Perforationswerkzeugs.

16. Herstellungsverfahren für eine optische Faser gemäß mindestens einem der Ansprüche 1 bis 14, bei dem beim ersten Arbeitsvorgang mehrere Kapillarröhrchen unter Bildung eines Bündels zusammengesetzt werden und das Bündel in ein Umhüllungsrohr eingesetzt wird, um die Vorform mit den Löchern zu bilden.

## Revendications

1. Procédé de fabrication d'une fibre optique comprenant un ou plusieurs trous le long de son axe, comprenant :
un premier processus de formation d'une préforme ayant au moins un trou ;
un second processus de chauffage de la préforme et séchage de l'intérieur des trous ; et
un troisième processus d'étirement de la préforme afin d'obtenir une fibre optique.

2. Procédé de fabrication d'une fibre optique selon la revendication 1, dans lequel :
au moins une partie des trous sont des trous débouchants ; et
le second processus est effectué pendant qu'un gaz sec traverse les trous débouchants.

3. Procédé de fabrication d'une fibre optique selon la revendication 1, dans lequel :
au moins une partie des trous ont une extrémité obturée ; et
le second processus est effectué pendant que les trous ayant une extrémité obturée sont remplis d'un gaz sec.

4. Procédé de fabrication d'une fibre optique selon la revendication 3, dans lequel :
le processus d'introduction d'un gaz sec dans les trous ayant une extrémité obturée et le processus d'évacuation du gaz sec hors des trous ayant une extrémité obturée sont répétés de manière alternée dans le second processus.

5. Procédé de fabrication d'une fibre optique selon la revendication 1, dans lequel :
au moins une partie des trous ont une extrémité obturée ; et
le second processus est effectué pendant que l'intérieur des trous ayant une extrémité obturée est soumis à une pression réduite pour l'évacuation.

6. Procédé de fabrication d'une fibre optique selon l'une des revendications 1 à 5, dans lequel :
la préforme est chauffée à une température supérieure ou égale à 800°C dans le second processus.

7. Procédé de fabrication d'une fibre optique selon l'une des revendications 2 à 4 ou 6 dans lequel :
le point de rosée du gaz sec est de -50°C ou moins.

8. Procédé de fabrication d'une fibre optique selon la revendication 7, dans lequel :
le gaz sec contient un gaz inerte dont la teneur est supérieure ou égale à 85% en fraction molaire.

9. Procédé de fabrication d'une fibre optique selon la revendication 8, dans lequel :
le gaz inerte est sélectionné dans le groupe constitué de : N₂, He et Ar.

10. Procédé de fabrication d'une fibre optique selon la revendication 7, dans lequel :
le gaz sec contient un gaz actif qui a un effet de déshydratation.

11. Procédé de fabrication d'une fibre optique selon la revendication 10, dans lequel :
le gaz actif ayant un effet de déshydratation contient au moins : du HF, du F₂, du Cl₂ et du CO.

12. Procédé de fabrication d'une fibre optique selon l'une des revendications 1 à 11 dans lequel :
les surfaces des parois internes des trous de la préforme sont lissées avant le second processus.

13. Procédé de fabrication d'une fibre optique selon l'une des revendications 1 à 12 dans lequel :
les surfaces des parois internes des trous de la préforme sont soumises à une gravure chimique à sec avant le second processus.

14. Procédé de fabrication d'une fibre optique selon l'une des revendications 1 à 13 dans lequel :
la pression dans les trous est ajustée pendant le troisième processus.

15. Procédé de fabrication d'une fibre optique selon l'une des revendications 1 à 14 dans lequel :
la préforme avec les trous est constituée d'une tige de verre en forme de colonne grâce à un outil de perforation dans le premier processus.

16. Procédé de fabrication d'une fibre optique selon l'une des revendications 1 à 14 dans lequel :
une pluralité de tubes capillaires sont assemblés pour former un faisceau et le faisceau est inséré dans une conduite de revêtement pour former la préforme ayant les trous dans le premier processus.
